# EUROPEAN PATENT APPLICATION

(11) **EP 4 324 591 A1**
(43) Date of publication of application: **21.02.2024**
(21) Application number: 21936969.1
(22) Date of filing: 15.04.2021
(51) Int. Cl.: B23Q 1/01, B23Q 1/48

(54) **MACHINE TOOL**

(71) Applicant: DMG Mori Co., Ltd., Yamatokoriyama-shi, Nara 639-1160 (JP)
(72) Inventor: MORI, Masahiko, Yamatokoriyama-shi, Nara 639-1160 (JP); TAGA, Mitsuru, Yamatokoriyama-shi, Nara 639-1160 (JP); MORIMOTO, Tadaharu, Yamatokoriyama-shi, Nara 639-1160 (JP); YAMAMOTO, Yoshinori, Yamatokoriyama-shi, Nara 639-1160 (JP); AIZAWA, Tatsuya, Yamatokoriyama-shi, Nara 639-1160 (JP); IKEDA., Yusuke, Yamatokoriyama-shi, Nara 639-1160 (JP); IRINO, Naruhiro, Yamatokoriyama-shi, Nara 639-1160 (JP); HIGUCHI, Yosuke, Yamatokoriyama-shi, Nara 639-1160 (JP); HARA, Hideki, Yamatokoriyama-shi, Nara 639-1160 (JP)
(74) Representative: Isarpatent
(86) International application number: PCT/JP2021/015559
(87) International publication number: WO 2022/219773

(57) **Abstract**

A machine tool includes a bed (11), a column (21) which is provided on the bed (11) so as to be erected therefrom, a saddle (31) which is a moving body supported by the column (21), and a tool spindle (91) which is supported by the saddle (31) and rotates a tool around a rotation center axis (110) extending in a Z-axis direction parallel to a horizontal direction. The saddle (31) has a frame portion (211) which is provided so as to surround the tool spindle (91). The thickness of the frame portion (211) in the Z-axis direction changes along a Y-axis direction parallel to a vertical direction, and becomes maximum at a first position (Pa) closer to an upper end portion (221) of the frame portion (211) than a lower end portion (222) of the frame portion (211).

## Description

### TECHNICAL FIELD

The present invention relates to a machine tool.

### BACKGROUND ART

For example, Japanese Patent Laying-Open No. 2005-88099 (PTL 1) discloses a horizontal machining center including a fixed bed, a column extending vertically upward at the rear end portion of the fixed bed, a saddle that is supported by the column so as to be movable in a left-right (X-axis) direction, and a turret base that is supported by the saddle so as to be movable in a vertical (Y-axis) direction.

### CITATION LIST

### PATENT LITERATURE

PTL 1: Japanese Patent Laying-Open No. 2005-88099

### SUMMARY OF INVENTION

### TECHNICAL PROBLEM

There is known a machine tool including a saddle for supporting a tool spindle in which the rotation center axis of a tool held by the tool spindle extends in a horizontal direction.

In such a machine tool, the weight of the saddle as a moving body is required to be reduced in order to reduce the moment of inertia of the saddle. Further, if a cutting load of a workpiece is transmitted to the saddle through the tool spindle, the saddle may vibrate significantly. In this case, the machining accuracy of the workpiece is lowered, so that it is required to restrain the vibration of the saddle.

Therefore, an object of the present invention is to solve the above problem, and provide a machine tool in which the weight of a saddle can be reduced and the vibration of the saddle can be restrained.

### SOLUTION TO PROBLEM

A machine tool according to the present invention comprises a bed, a column provided on the bed so as to be erected therefrom, a saddle that is a moving body supported by the column, and a tool spindle that is supported by the saddle and rotates a tool around a rotation center axis extending in a first axial direction parallel to a horizontal direction. The saddle has a frame portion which is provided so as to surround the tool spindle. A thickness of the frame portion in the first axial direction changes along a second axial direction parallel to a vertical direction, and is maximum at a first position closer to an upper end portion of the frame portion than a lower end portion of the frame portion.

According to the thus-configured machine tool, since the thickness of the frame portion in the first axial direction changes along the second axial direction, the weight of the saddle can be reduced as compared with a case where the thickness of the frame portion is ensured to be large over an entire area in the second axial direction. Further, since the bed supports a lower end portion of the column, the saddle supported by the column tends to vibrate at a position closer to the upper end portion of the frame portion. On the other hand, by making the thickness of the frame portion in the first axial direction maximum at the first position closer to the upper end portion than the lower end portion of the frame portion, it is possible to enhance the rigidity of the saddle at the first position and restrain the vibration of the saddle effectively.

Preferably, the saddle is movable with respect to the column in a third axial direction that is parallel to the horizontal direction and orthogonal to the first axial direction. The tool spindle is movable with respect to the saddle in the second axial direction. The machine tool further comprises a first guide portion that guides the saddle in the third axial direction and is arranged at the first position in the second axial direction.

According to the thus-configured machine tool, since the saddle is supported by the first guide portion at the first position, it is possible to restrain the vibration of the saddle more effectively.

Preferably, the machine tool further comprises a second guide portion that guides the saddle in the third axial direction and is arranged at a second position below the first position in the second axial direction. A thickness of the column in the first axial direction at the second position is larger than a thickness of the column in the first axial direction at the first position.

According to the thus-configured machine tool, by relatively increasing the thickness of the column in the first direction at the second position below the first position, the thickness of the column on the lower end portion side supported by the bed is ensured sufficiently. As a result, the column is more firmly supported by the bed, so that the vibration of the saddle can be restrained more effectively.

Preferably, the column has a first guide mounting surface and a second guide mounting surface to which the first guide portion and the second guide portion are attached, respectively. The saddle has a third guide mounting surface and a fourth guide mounting surface which face the first guide mounting surface and the second guide mounting surface in the first axial direction respectively and to which the first guide portion and the second guide portion are attached, respectively.

According to the thus-configured machine tool, the first guide mounting surface and the third guide mounting surface face each other in the first axial direction and the second guide mounting surface and the fourth guide mounting surface face each other in the first axial direction, so that a work of attaching the first guide portion and the second guide portion to the column or the saddle can be easily performed.

Preferably, the machine tool further comprises a first feeding device that is arranged at a position closer to the first guide portion than the second guide portion in the second axial direction and drives the saddle in the third axial direction, and a second feeding device that is provided at a position closer to the second guide portion than the first guide portion in the second axial direction and drives the saddle in the third axial direction.

According to the thus-configured machine tool, it is possible to restrain occurrence of a difference between the driving force on the first guide portion side and the driving force on the second guide portion side. As a result, the saddle can be moved more stably in the third axial direction.

Preferably, the frame portion includes a first gradually decreasing portion in which a thickness of the frame portion in the first axial direction decreases from the first position to an upper end portion of the frame portion in the second axial direction, and a second gradually decreasing portion in which the thickness of the frame portion in the first axial direction decreases from the first position to a lower end portion of the frame portion in the second axial direction.

According to the thus-configured machine tool, the weight of the saddle can be further reduced.

Preferably, the tool spindle is movable in the second axial direction with respect to the saddle. When the tool spindle is positioned at an upper stroke end in the second axial direction, the rotation center axis is located at the same height as the first position or above the first position in the second axial direction.

According to the thus-configured machine tool, even when the tool spindle moves to the upper stroke end in the second axial direction, the vibration of the saddle can be effectively restrained by maximizing the thickness of the frame portion in the first axial direction at the first position closer to the upper end portion than the lower end portion of the frame portion.

### ADVANTAGEOUS EFFECT OF INVENTION

As described above, according to the present invention, it is possible to provide a machine tool in which the weight of a saddle can be reduced and the vibration of the saddle can be restrained.

### BRIEF DESCRIPTION OF DRAWINGS

Fig. 1 is a perspective view showing a machine tool in an embodiment of the present invention.
Fig. 2 is a top view showing the machine tool in Fig. 1.
Fig. 3 is a side view showing the machine tool in Fig. 1.
Fig. 4 is a front view showing the machine tool in Fig. 1.
Fig. 5 is a perspective view showing a saddle in Fig. 1.
Fig. 6 is a top view showing the saddle in Fig. 1.
Fig. 7 is a side view showing the saddle in Fig. 1.
Fig. 8 is a side view showing an enlarged area surrounded by a two-dotted chain line VIII in Fig. 3.
Fig. 9 is a side view showing an enlarged area surrounded by a two-dotted chain line IX in Fig. 3.
Fig. 10 is a side view showing the machine tool when a tool spindle is positioned at an upper stroke end in a Y-axis direction.
Fig. 11 is a side view showing the machine tool when the tool spindle is positioned at a lower stroke end in the Y-axis direction.

### DESCRIPTION OF EMBODIMENT

An embodiment of the present invention will be described with reference to the drawings. In figures referred to below, the same numerals are given to the same or corresponding members.

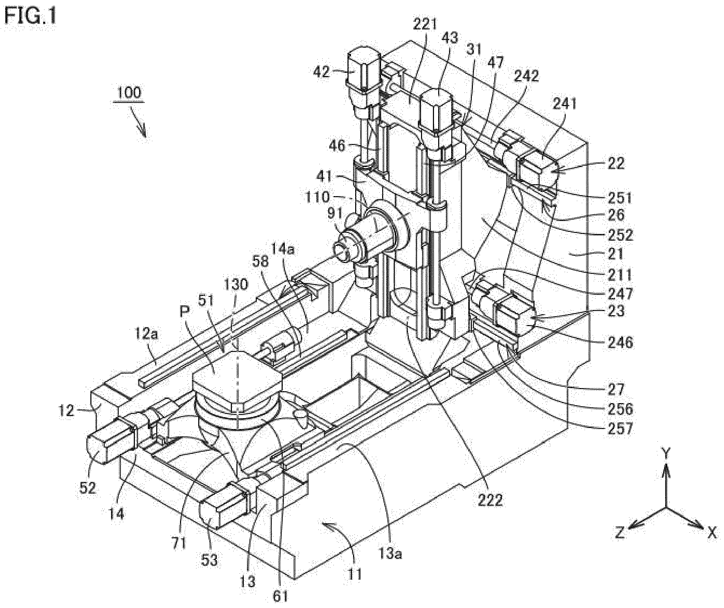

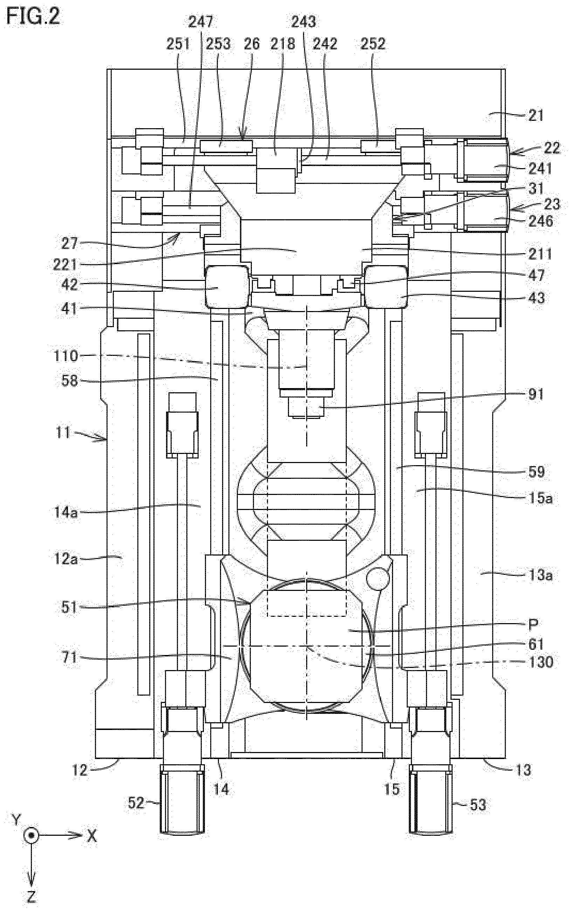

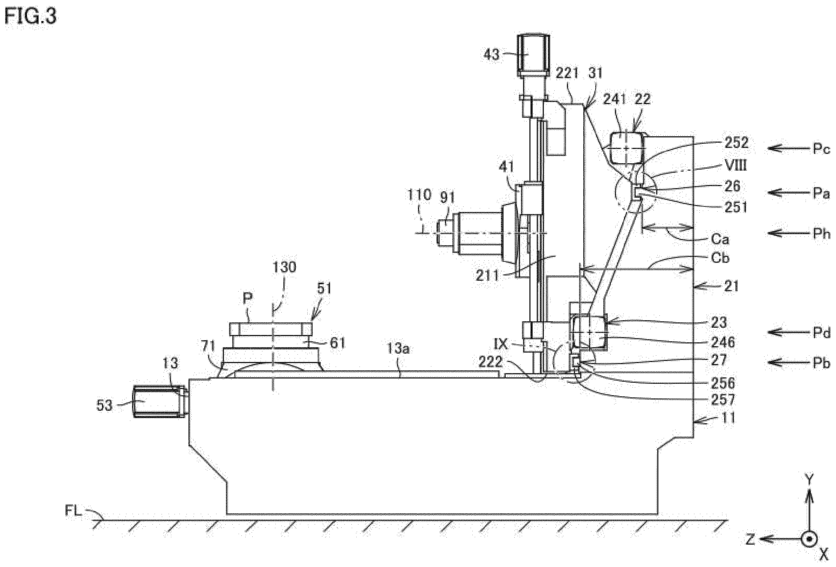

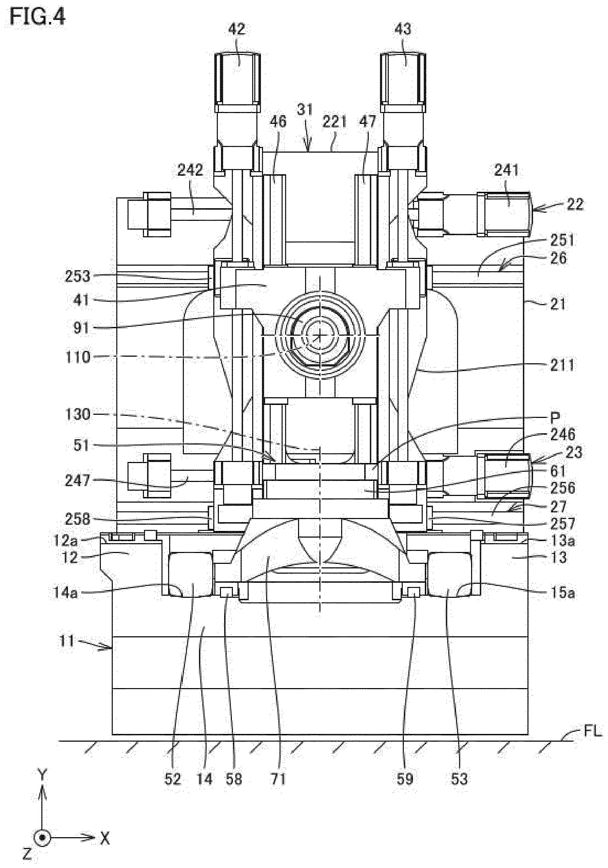

Fig. 1 is a perspective view showing a machine tool in the embodiment of the present invention. Fig. 2 is a top view showing the machine tool in Fig. 1. Fig. 3 is a side view showing the machine tool in Fig. 1. Fig. 4 is a front view showing the machine tool in Fig. 1.

In the figures, the internal structure of the machine tool is shown by looking through a cover body that forms the exterior of the machine tool.

Referring to Figs. 1 to 4, a machine tool 100 in the present embodiment is a machining center that machines a workpiece by bringing a rotating tool into contact with the workpiece. Machine tool 100 is a horizontal machining center in which the rotation center axis of the tool extends in a horizontal direction. Machine tool 100 is an NC (Numerically Controlled) machine tool in which various operations for machining a workpiece are automated under numerical control by a computer.

In the present specification, an axis which is parallel to the horizontal direction and parallel to the rotation center axis of the tool is referred to as a "Z-axis (first axis)", an axis parallel to a vertical direction is referred to as a "Y-axis (second axis)", and an axis which is parallel to the horizontal direction and orthogonal to the rotation center axis of the tool is referred to as an "X-axis (third axis)". A left direction in Fig. 3 is a "+Z-axis direction", and a right direction is a "-Z-axis direction." An upward direction is a "+Y-axis direction", and a downward direction is a "-Y-axis direction". A right direction in Fig. 2 is a "+X-axis direction", and a left direction is a "-X-axis direction".

First, an overall structure of machine tool 100 will be described. Machine tool 100 includes a bed 11, a column 21, a saddle 31, a cross slide 41, a tool spindle 91, and a table 51, etc.

Bed 11 is a base member for supporting column 21, saddle 31, cross slide 41, tool spindle 91, table 51, etc., and is installed on the floor of a factory or the like. Bed 11 is made of metal such as cast iron.

When viewed from above, bed 11 has a rectangular shape having long sides extending in the Z-axis direction and short sides extending in the X-axis direction. The entire length of bed 11 in the Y-axis direction is smaller than the entire length of bed 11 in the Z-axis direction, and smaller than the entire length of bed 11 in the X-axis direction.

Bed 11 has a first peripheral wall portion 12 and a second peripheral wall portion 13. First peripheral wall portion 12 and second peripheral wall portion 13 are provided at the periphery of bed 11 when viewed from above. First peripheral wall portion 12 and second peripheral wall portion 13 are provided at both end portions of bed 11 in the X-axis direction. First peripheral wall portion 12 is provided at an end portion of bed 11 in the -X-axis direction. Second peripheral wall portion 13 is provided at an end portion of bed 11 in the +X-axis direction. First peripheral wall portion 12 and second peripheral wall portion 13 extend along the Z-axis direction while forming upward rising wall shapes.

First peripheral wall portion 12 has a first top surface 12a. Second peripheral wall portion 13 has a second top surface 13a. First top surface 12a and second top surface 13a are planes parallel to an X-axis-Z-axis plane. First top surface 12a and second top surface 13a face upward.

Bed 11 further includes a first step portion 14 and a second step portion 15. First step portion 14 forms a step recessed downward from first peripheral wall portion 12. Second step portion 15 forms a step recessed downward from second peripheral wall portion 13. First step portion 14 is provided between first peripheral wall portion 12 and second step portion 15 in the X-axis direction. Second step portion 15 is provided between first step portion 14 and second peripheral wall portion 13 in the X-axis direction.

First step portion 14 has a third top surface 14a. First top surface 12a is arranged above third top surface 14a. First peripheral wall portion 12 has a convex shape protruding upward from third top surface 14a. Second step portion 15 has a fourth top surface 15a. Second top surface 13a is arranged above fourth top surface 15a. Second peripheral wall portion 13 has a convex shape protruding upward from fourth top surface 15a.

Column 21 is provided on bed 11 so as to be erected therefrom. Column 21 is placed on the upper surface of bed 11. Column 21 as a whole has a gate-like shape rising upward from bed 11. Column 21 is fixed to bed 11. Column 21 is fastened to bed 11 with bolts. Column 21 is arranged at an end portion of bed 11 in the -Z-axis direction.

Saddle 31 is supported by column 21. Saddle 31 is provided on the front surface of column 21 facing the +Z-axis direction. Saddle 31 as a whole has a frame-like shape rising upward from bed 11. Saddle 31 is a moving body. Saddle 31 is provided so as to be movable in the X-axis direction with respect to column 21.

Note that the structures of column 21 and saddle 31 and a structure for moving saddle 31 in the X-axis direction will be described in detail later.

Cross slide 41 is supported by saddle 31. Cross slide 41 is provided on the front surface of saddle 31 facing the +Z-axis direction. Cross slide 41 as a whole has a plate-like shape parallel to an X-axis-Y-axis plane. Cross slide 41 is provided so as to be movable in the Y-axis direction (vertical direction) with respect to saddle 31 by feeding devices 42 and 43 and guide portions 46 and 47 provided on saddle 31 and the like.

Tool spindle 91 is supported by cross slide 41. Tool spindle 91 is fixed to cross slide 41. Tool spindle 91 penetrates through cross slide 41 and protrudes from cross slide 41 in the +Z-axis direction and the -Z-axis direction. Tool spindle 91 is supported by column 21 via cross slide 41. Tool spindle 91 moves in the Y-axis direction (vertical direction) together with cross slide 41 with respect to saddle 31.

Tool spindle 91 is provided so as to be driven rotatably around a rotation center axis 110 parallel to the Z-axis by a motor. Tool spindle 91 holds a tool for machining a workpiece in machine tool 100. Following rotation of tool spindle 91, the tool held by tool spindle 91 rotates around rotation center axis 110.

Table 51 is supported by bed 11. Table 51 is provided on bed 11. Table 51 is provided at a position spaced from column 21, saddle 31, and cross slide 41 in the +Z-axis direction. Table 51 is a device for holding a workpiece. Table 51 holds the workpiece at a position facing tool spindle 91 in the Z-axis direction.

Table 51 includes a workpiece holder 61 and a table base 71. Workpiece holder 61 is arranged between first peripheral wall portion 12 and second peripheral wall portion 13 in the X-axis direction. Workpiece holder 61 detachably holds the workpiece. A pallet P is mounted on workpiece holder 61. A rotation mechanism portion (not shown) for rotating pallet P around a rotation center axis 130 extending in the Y-axis direction, and a clamp mechanism portion (not shown) for clamping and unclamping pallet P are incorporated in workpiece holder 61. For example, a jig such as an angle rest to which the workpiece is attached is mounted on pallet P.

Workpiece holder 61 is supported by table base 71. Table base 71 is provided below workpiece holder 61. Table base 71 is provided so as to straddle between third top surface 14a and fourth top surface 15a in the X-axis direction when viewed from above.

Table 51 is provided so as to be movable in the Z-axis direction with respect to bed 11 by feeding devices 52 and 53 and guide portions 58 and 59. Feeding device 52 and guide portion 58 are provided on third top surface 14a. Feeding device 52 and guide portion 58 are connected to table base 71 on third top surface 14a. Feeding device 53 and guide portion 59 are provided on fourth top surface 15a. Feeding device 53 and guide portion 59 are connected to table base 71 on fourth top surface 15a.

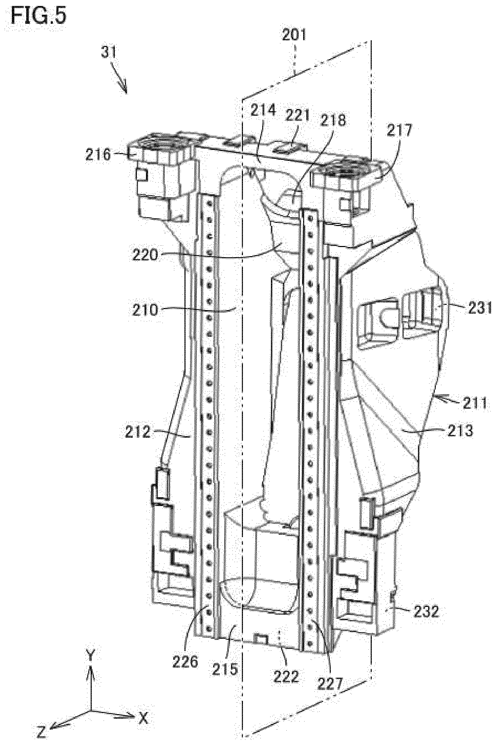

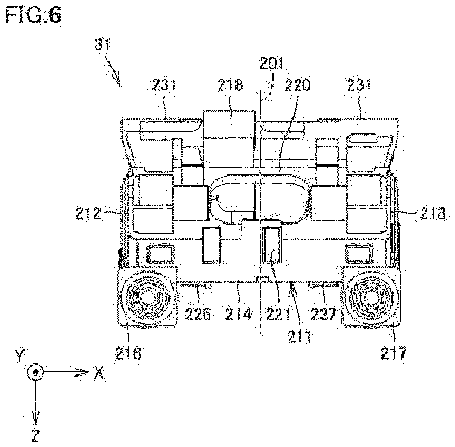

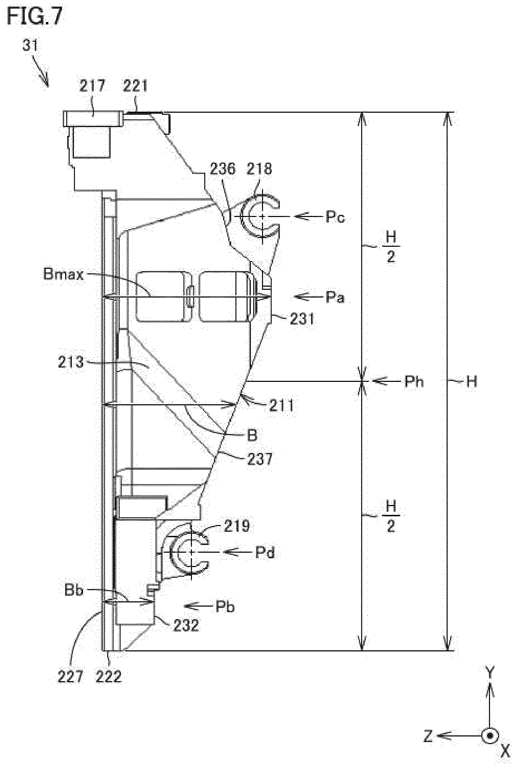

Next, the structures of saddle 31 and column 21 and the structure for moving saddle 31 in the X-axis direction will be described in more detail. Fig. 5 is a perspective view showing the saddle in Fig. 1. Fig. 6 is a top view showing the saddle in Fig. 1. Fig. 7 is a side view showing the saddle in Fig. 1.

Referring to Figs. 1 to 7, saddle 31 is made of metal such as cast iron. Saddle 31 has a frame portion 211. Frame portion 211 is provided as a rigid body that receives a cutting load from tool spindle 91 during machining of the workpiece.

Frame portion 211 has a frame-like shape. Frame portion 211 is provided so as to surround tool spindle 91. Frame portion 211 has a frame-like shape that revolves around rotation center axis 110 of tool spindle 91.

The entire length of frame portion 211 in the Y-axis direction is larger than the entire length of frame portion 211 in the Z-axis direction, and is larger than the entire length of frame portion 211 in the X-axis direction. The entire length of frame portion 211 in the Y-axis direction is larger than the entire length of column 21 in the Y-axis direction. The entire length of frame portion 211 in the Y-axis direction may be the entire length of column 21 in the Y-axis direction or less. The entire length of frame portion 211 in the X-axis direction is smaller than the entire length of column 21 in the X-axis direction.

The entire length (maximum thickness) of frame portion 211 in the Z-axis direction may be smaller than the entire length (maximum thickness) of column 21 in the Z-axis direction, or may be the entire length (maximum thickness) of column 21 in the Z-axis direction or more.

As shown in Figs. 5 to 7, frame portion 211 includes a first side wall portion 212, a second side wall portion 213, an upper wall portion 214, and a lower wall portion 215.

First side wall portion 212 and second side wall portion 213 are provided apart from each other in the X-axis direction. First side wall portion 212 and second side wall portion 213 extend in the Y-axis direction (vertical direction). Upper wall portion 214 and lower wall portion 215 extend in the X-axis direction. Upper wall portion 214 and lower wall portion 215 are provided apart from each other in the Y-axis direction. An end portion of upper wall portion 214 in the -X-axis direction is connected to an end portion of first side wall portion 212 in the +Y-axis direction, and an end portion of upper wall portion 214 in the +X-axis direction is connected to an end portion of second side wall portion 213 in the +Y-axis direction. An end portion of lower wall portion 215 in the -X-axis direction is connected to an end portion of first side wall portion 212 in the -Y-axis direction, and an end portion of lower wall portion 215 in the +X-axis direction is connected to an end portion of second side wall portion 213 in the -Y-axis direction.

First side wall portion 212, second side wall portion 213, upper wall portion 214, and lower wall portion 215 are integrally formed into a frame shape. An opening portion 210 is provided inside first side wall portion 212, second side wall portion 213, upper wall portion 214, and lower wall portion 215. Opening portion 210 extends in the Z-axis direction. Tool spindle 91 is inserted into opening portion 210. First side wall portion 212 and second side wall portion 213 overlap a part (rear end portion) of tool spindle 91 when viewed in the X-axis direction. Upper wall portion 214 and lower wall portion 215 overlap a part (rear end portion) of tool spindle 91 when viewed in the Y-axis direction.

Frame portion 211 may have a shape that is symmetrical with respect to a virtual plane 201 set therein. Virtual plane 201 is a plane that is parallel to a Y-axis-Z-axis plane and includes rotation center axis 110 of tool spindle 91. First side wall portion 212 and second side wall portion 213 may have shapes that are symmetrical with each other with respect to virtual plane 201 interposed between. Upper wall portion 214 may have a shape that is symmetrical with respect to virtual plane 201 set therein. Lower wall portion 215 may have a shape that is symmetrical with respect to virtual plane 201 set therein.

Note that the symmetrical shape described above does not have a strict meaning, but it means that frame portion 211 may have a shape that is symmetrical with respect to virtual plane 201 set therein when seats to which various parts such as sensors or scales are attached, or female screws or holes for attaching the various parts are excluded.

Frame portion 211 has an upper end portion 221 and a lower end portion 222. Upper end portion 221 is a tip portion of frame portion 211 in the +Y-axis direction. Upper end portion 221 is a part of frame portion 211 which is disposed at the highest position of frame portion 211. Upper end portion 221 consists of the top surface of upper wall portion 214. Lower end portion 222 is a tip portion of frame portion 211 in the -Y-axis direction. Lower end portion 222 is a part of frame portion 211 which is disposed at the lowest position of frame portion 211. Lower end portion 222 consists of the bottom surface of lower wall portion 215.

Saddle 31 further has an intermediate rib portion 220. Intermediate rib portion 220 extends in the X-axis direction between first side wall portion 212 and second side wall portion 213.

An end portion of intermediate rib portion 220 in the -X-axis direction is connected to an end portion of first side wall portion 212 in the -Z-axis direction, and an end portion of intermediate rib portion 220 in the +X-axis direction is connected to an end portion of second side wall portion 213 in the -Z-axis direction. Intermediate rib portion 220 is provided at a position which is away from upper wall portion 214 in the -Y-axis direction and away from lower wall portion 215 in the +Y-axis direction. Intermediate rib portion 220 is provided at a position which is closer to upper end portion 221 than lower end portion 222 of frame portion 211 in the Y-axis direction.

Saddle 31 further includes a first motor attachment portion 216, a second motor attachment portion 217, a first nut attachment portion 218, and a second nut attachment portion 219.

First motor attachment portion 216 is provided at a corner where first side wall portion 212 and upper wall portion 214 intersect each other. Second motor attachment portion 217 is provided at a corner where second side wall portion 213 and upper wall portion 214 intersect each other. First motor attachment portion 216 and second motor attachment portion 217 protrude from frame portion 211 in the +Z-axis direction. First motor attachment portion 216 and second motor attachment portion 217 each have a cylindrical shape extending in the Y-axis direction as a whole. First motor attachment portion 216 and second motor attachment portion 217 are provided symmetrically with each other with respect to virtual plane 201 interposed therebetween.

First nut attachment portion 218 protrudes from intermediate rib portion 220 in the -Z-axis direction. Second nut attachment portion 219 protrudes from lower wall portion 215 in the -Z-axis direction. First nut attachment portion 218 and second nut attachment portion 219 each have a cylindrical shape that extends in the X-axis direction as a whole and are partially opened in the -Z-axis direction.

As shown in Figs. 1 to 7, machine tool 100 further includes a first feeding device 22 and a second feeding device 23. First feeding device 22 and second feeding device 23 are provided on column 21 and saddle 31. First feeding device 22 and second feeding device 23 move saddle 31 in the Z-axis direction by applying driving force to saddle 31.

First feeding device 22 includes a servomotor 241, a screw shaft 242, and a nut 243. Second feeding device 23 includes a servomotor 246, a screw shaft 247, and a nut (not shown).

As shown in Fig. 2, screw shaft 242 extends in the X-axis direction. Screw shaft 242 is rotatably supported by a plurality of bearings arranged apart from one another in the X-axis direction. Nut 243 is fitted onto screw shaft 242 via a plurality of balls. Nut 243 is fixed to saddle 31. Nut 243 is attached to first nut attachment portion 218. Screw shaft 242 and nut 243 constitute a ball screw. An output shaft of servomotor 241 is connected to screw shaft 242. Rotation from servomotor 241 is input to screw shaft 242.

Screw shaft 247 extends in the X-axis direction. Screw shaft 247 is rotatably supported by a plurality of bearings arranged apart from one another in the X-axis direction. A nut (not shown) is fitted onto screw shaft 247 via a plurality of balls. A nut (not shown) is fixed to saddle 31. The nut (not shown) is attached to second nut attachment portion 219. Screw shaft 247 and the nut (not shown) constitute a ball screw. An output shaft of servomotor 246 is connected to screw shaft 247. Rotation from servomotor 246 is input to screw shaft 247.

As shown in Fig. 3, first feeding device 22 is provided above second feeding device 23. First feeding device 22 is provided at a position closer to upper end portion 221 than lower end portion 222 of frame portion 211 in the Y-axis direction. Second feeding device 23 is provided at a position closer to lower end portion 222 than upper end portion 221 of frame portion 211 in the Y-axis direction. First feeding device 22 is provided at a position which is displaced from second feeding device 23 in the -Z-axis direction.

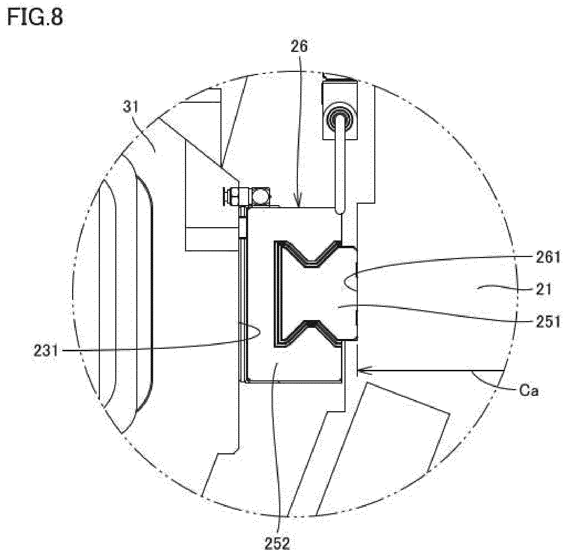

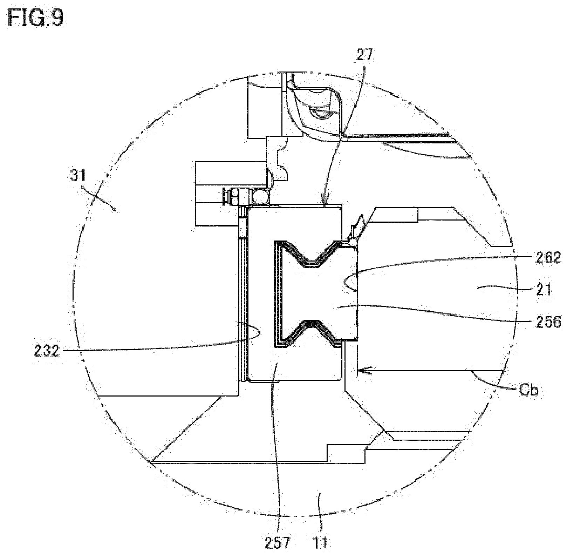

Fig. 8 is an enlarged side view showing a range surrounded by a two-dotted chain line VIII in Fig. 3. Fig. 9 is an enlarged side view showing a range surrounded by a two-dotted chain line IX in Fig. 3.

Referring to Figs. 8 and 9, saddle 31 has a first guide mounting surface 231 and a second guide mounting surface 232. First guide mounting surface 231 and second guide mounting surface 232 consist of planes parallel to the X-axis-Y-axis plane. First guide mounting surface 231 and second guide mounting surface 232 face the -Z-axis direction.

Column 21 further has a third guide mounting surface 261 and a fourth guide mounting surface 262. Third guide mounting surface 261 and fourth guide mounting surface 262 consist of planes parallel to the X-axis-Y-axis plane. Third guide mounting surface 261 and fourth guide mounting surface 262 face the +Z-axis direction.

Third guide mounting surface 261 faces first guide mounting surface 231 in the Z-axis direction. Fourth guide mounting surface 262 faces second guide mounting surface 232 in the Z-axis direction.

Referring to Figs. 1 to 9, machine tool 100 further includes a first guide portion 26 and a second guide portion 27. First guide portion 26 and second guide portion 27 are provided on column 21 and saddle 31. First guide portion 26 and second guide portion 27 guide saddle 31 in the X-axis direction.

First guide portion 26 is attached to first guide mounting surface 231 and third guide mounting surface 261.

First guide portion 26 includes a rail 251, a slider 252 and a slider 253. Rail 251 extends in the X-axis direction. Rail 251 is fastened to third guide mounting surface 261 with a bolt. Slider 252 and slider 253 are fitted to rail 251 via a plurality of balls. Slider 252 and slider 253 are guided by rail 251 so as to be slidable in the X-axis direction. Slider 252 and slider 253 are provided apart from each other in the X-axis direction. Slider 252 and slider 253 are fastened to first guide mounting surface 231 with bolts. Rail 251, slider 252, and slider 253 constitute a linear guide that is a linear motion guide mechanism.

Second guide portion 27 is attached to second guide mounting surface 232 and fourth guide mounting surface 262.

Second guide portion 27 includes a rail 256, a slider 257, and a slider 258. Rail 256 extends in the X-axis direction. Rail 256 is fastened to fourth guide mounting surface 262 with a bolt. Slider 257 and slider 258 are fitted to rail 256 via a plurality of balls. Slider 257 and slider 258 are guided by rail 256 so as to be slidable in the X-axis direction. Slider 257 and slider 258 are provided apart from each other in the X-axis direction. Slider 257 and slider 258 are fastened to second guide mounting surface 232 with bolts. Rail 256, slider 257 and slider 258 constitute a linear guide which is a linear motion guide mechanism.

First guide portion 26 is provided above second guide portion 27. First guide portion 26 is provided at a position closer to upper end portion 221 than lower end portion 222 of frame portion 211 in the Y-axis direction. Second guide portion 27 is provided at a position closer to lower end portion 222 than upper end portion 221 of frame portion 211 in the Y-axis direction. First guide portion 26 is provided at a position which is displaced from second guide portion 27 in the -Z-axis direction.

In a work of assembling first guide portion 26 and second guide portion 27 to column 21, an operator sets column 21 in a posture in which the rear surface of column 21 facing the -Z-axis direction lies on the floor, attaches rail 251 to third guide mounting surface 261 and attaches rail 256 to fourth guide mounting surface 262.

In the present embodiment, third guide mounting surface 261 and fourth guide mounting surface 262 face first guide mounting surface 231 and second guide mounting surface 232 in the Z-axis direction respectively, so that in a work of assembling first guide portion 26 and second guide portion 27 to column 21, third guide mounting surface 261 and fourth guide mounting surface 262 face upward. As a result, it is possible to easily perform the work of assembling first guide portion 26 and second guide portion 27 to column 21.

As shown in Figs. 5 to 7, column 21 further includes a fifth guide mounting surface 226 and a sixth guide mounting surface 227. Fifth guide mounting surface 226 and sixth guide mounting surface 227 consist of planes parallel to the X-axis-Y-axis plane. Fifth guide mounting surface 226 and sixth guide mounting surface 227 face the +Z-axis direction. Fifth guide mounting surface 226 and sixth guide mounting surface 227 are provided at end portions of frame portion 211 in the +Z-axis direction.

Fifth guide mounting surface 226 and sixth guide mounting surface 227 are provided apart from each other in the X-axis direction. Fifth guide mounting surface 226 and sixth guide mounting surface 227 are provided on first side wall portion 212 and second side wall portion 213, respectively. Fifth guide mounting surface 226 and sixth guide mounting surface 227 each extend in a strip shape along the Y-axis direction.

A rail of guide portion 46 for guiding cross slide 41 in the Y-axis direction is attached to fifth guide mounting surface 226. A rail of guide portion 47 for guiding cross slide 41 in the Y-axis direction is attached to sixth guide mounting surface 227.

As shown in Fig. 7, a thickness B of frame portion 211 in the Z-axis direction changes along the Y-axis direction. Thickness B of each of first side wall portion 212 and second side wall portion 213 in the Z-axis direction changes along the Y-axis direction.

Thickness B of frame portion 211 in the Z-axis direction may change in a part of the section between upper end portion 221 and lower end portion 222 of frame portion 211, or may change in the entire section between upper end portion 221 and lower end portion 222 of frame portion 211. In other words, frame portion 211 has at least a part of the section between upper end portion 221 and lower end portion 222 of frame portion 211 in which thickness B of frame portion 211 in the Z-axis direction changes along the Y-axis direction.

Thickness B of frame portion 211 in the Z-axis direction becomes maximum (a maximum thickness Bmax) at a first position Pa closer to upper end portion 221 of frame portion 211 than lower end portion 222 of frame portion 211. The length between upper end portion 221 and first position Pa in the Y-axis direction is smaller than the length between first position Pa and lower end portion 222 in the Y-axis direction. First position Pa corresponds to a predetermined range in the Y-axis direction in which frame portion 211 has maximum thickness Bmax.

Frame portion 211 has a length (full length) H between upper end portion 221 and lower end portion 222 in the Y-axis direction. Frame portion 211 has a length H/2 between upper end portion 221 and an intermediate position Ph in the Y-axis direction, and has a length H/2 between intermediate position Ph and lower end portion 222 in the Y-axis direction. Intermediate position Ph is located at the center between upper end portion 221 and lower end portion 222 in the Y-axis direction.

First position Pa is located above intermediate position Pa. First position Pa is located closer to intermediate position Ph than upper end portion 221 in the Y-axis direction. First position Pa may be located closer to upper end portion 221 than intermediate position Ph in the Y-axis direction, or may be located at the center between upper end portion 221 and intermediate position Ph.

As shown in Figs. 3 and 7, first guide portion 26 (rail 251, slider 252, slider 253) is arranged at first position Pa in the Y-axis direction. First guide mounting surface 231 is arranged at first position Pa in the Y-axis direction. The center position of rail 251 in the Y-axis direction is located at first position Pa. Note that maximum thickness Bmax of frame portion 211 in the Z-axis direction approximately corresponds to the length between first guide mounting surface 231 and each of fifth guide mounting surface 226 and sixth guide mounting surface 227.

Second guide portion 27 (rail 256, slider 257, slider 258) is arranged at a second position Pb in the Y-axis direction. Second guide mounting surface 232 is arranged at second position Pb in the Y-axis direction. Second position Pb corresponds to the center position of rail 256 in the Y-axis direction.

Second position Pb is located below first position Pa. Second position Pb is located closer to lower end portion 222 than upper end portion 221 of frame portion 211 in the Y-axis direction. Second position Pb is located closer to lower end portion 222 than intermediate position Ph in the Y-axis direction. Second position Pb may be located closer to intermediate position Ph than lower end portion 222 in the Y-axis direction, or may be located at the center between intermediate position Ph and lower end portion 222.

Frame portion 211 has a thickness Bb in the Z-axis direction at second position Pb. Note that thickness Bb of frame portion 211 in the Z-axis direction is approximately the length between second guide mounting surface 232 and each of fifth guide mounting surface 226 and sixth guide mounting surface 227. Maximum thickness Bmax of frame portion 211 in the Z-axis direction may be twice or more thickness Bb of frame portion 211 in the Z-axis direction, or may be three times or more (Bmax≥2Bb, Bmax≥3Bb).

A thickness Cb of column 21 in the Z-axis direction at second position Pb is larger than a thickness Ca of column 21 in the Z-axis direction at first position Pa (Cb>Ca). Thickness Cb of column 21 in the Z-axis direction may be 1.5 times or more or twice or more thickness Ca of column 21 in the Z-axis direction (Cb≥1.5Ca, Cb≥2Ca).

The sum of maximum thickness Bmax of frame portion 211 in the Z-axis direction and thickness Ca of column 21 in the Z-axis direction may be equal to the sum of thickness Bb of frame portion 211 in the Z-axis direction and thickness Cb of column 21 in the Z-axis direction (Bmax+Ca=Bb+Cb).

First feeding device 22 is arranged at a third position Pc closer to first guide portion 26 than second guide portion 27 in the Y-axis direction. Second feeding device 23 is arranged at a fourth position Pd closer to second guide portion 27 than first guide portion 26 in the Y-axis direction. Third position Pc corresponds to the position of the rotation center axis of screw shaft 242, and fourth position Pd corresponds to the position of the rotation center axis of screw shaft 247.

Third position Pc is located closer to upper end portion 221 than lower end portion 222 of frame portion 211 in the Y-axis direction. Third position Pc is located above first position Pa. First feeding device 22 is provided side by side with first guide portion 26 in the Y-axis direction (vertical direction). Fourth position Pd is located closer to lower end portion 222 than upper end portion 221 of frame portion 211 in the Y-axis direction. Fourth position Pd is located above second position Pb. Second feeding device 23 is provided side by side with second guide portion 27 in the Y-axis direction (vertical direction).

According to such a configuration, first feeding device 22 is arranged at third position Pc closer to first guide portion 26 than second guide portion 27 in the Y-axis direction, and second feeding device 23 is arranged at fourth position Pd closer to second guide portion 27 than first guide portion 26 in the Y-axis direction, so that it is possible to restrain occurrence of a difference between the driving force on the side of first guide portion 26 and the driving force on the side of second guide portion 27. As a result, saddle 31 can be moved more stably in the X-axis direction.

Note that first feeding device 22 and first guide portion 26 may be provided so as to be interchanged with each other in the Y-axis direction (vertical direction), and second feeding device 23 and second guide portion 27 may be provided so as to be interchanged with each other in the Y-axis direction (vertical direction).

As shown in Fig. 7, frame portion 211 has a first gradually decreasing portion 236 and a second gradually decreasing portion 237. Thickness B of frame portion 211 in the Z-axis direction decreases from first position Pa to upper end portion 221 in first gradually decreasing portion 236. First gradually decreasing portion 236 is provided between first position Pa and upper end portion 221 in the Y-axis direction. Thickness B of frame portion 211 in the Z-axis direction decreases from first position Pa to lower end portion 222 in second gradually decreasing portion 237. Second gradually decreasing portion 237 is provided between first position Pa and fourth position Pd in the Y-axis direction.

When viewed in the X-axis direction, frame portion 211 as a whole has a triangular shape including a bottom side extending in the Y-axis direction at an end portion in the +Z-axis direction, a first oblique side extending from an upper end of the bottom side in the -Z-axis direction and in the -Y-axis direction, and a second oblique side extending from a lower end of the bottom side in the -Z-axis direction and in the +Y-axis direction and intersecting with the first oblique side at first position Pa.

As shown in Fig. 3, when viewed in the X-axis direction, column 21 as a whole has a triangular shape including a first side extending in the Y-axis direction at an end portion thereof in the -Z-axis direction, a second side which extends from a lower end of the first side in the +Z-axis direction and has a smaller length than the first side, and an oblique side which extends from an upper end of the first side in the +Z-axis direction and the -Y-axis direction and intersects with the second side.

As shown in Figs. 1 to 7, since thickness B of frame portion 211 in the Z-axis direction changes along the Y-axis direction, it is possible to reduce the weight of saddle 31 as compared with the case where thickness B of frame portion 211 is ensured to be large over the entire area in the Y-axis direction. As a result, the moment of inertia of saddle 31 moving in the X-axis direction can be reduced, and vibration occurring during workpiece machining can be restrained.

Since the lower end portion of column 21 is supported by bed 11, saddle 31 supported by column 21 tends to vibrate at a position closer to upper end portion 221 than lower end portion 222 of frame portion 211. On the other hand, it is possible to enhance the rigidity of saddle 31 at first position Pa by maximizing thickness B of frame portion 211 in the Z-axis direction at first position Pa closer to upper end portion 221 than lower end portion 222 of frame portion 211. As a result, even when the cutting load of the workpiece is transmitted to saddle 31 through tool spindle 91, the vibration of saddle 31 can be effectively restrained.

Further, first guide portion 26 is arranged at first position Pa where thickness B of frame portion 211 in the Z-axis direction is maximum. With such a configuration, saddle 31 is supported by first guide portion 26 at first position Pa, so that the vibration of saddle 31 can be restrained more effectively.

Further, thickness Cb of column 21 in the Z-axis direction at second position Pb below first position Pa is larger than thickness Ca of column 21 in the Z-axis direction at first position Pa. Such a configuration ensures that column 21 on the lower end portion side supported by bed 11 has a sufficient thickness. As a result, column 21 is more firmly supported by bed 11, so that the vibration of saddle 31 supported by column 21 can be restrained more effectively.

Further, frame portion 211 includes first gradually decreasing portion 236 and second gradually decreasing portion 237. In first gradually decreasing portion 236, thickness B of frame portion 211 in the Z-axis direction decreases from first position Pa to upper end portion 221, and in second gradually decreasing portion 237, thickness B of frame portion 211 in the Z-axis direction decreases from first position Pa to lower end portion 222, so that the weight of saddle 31 can be reduced.

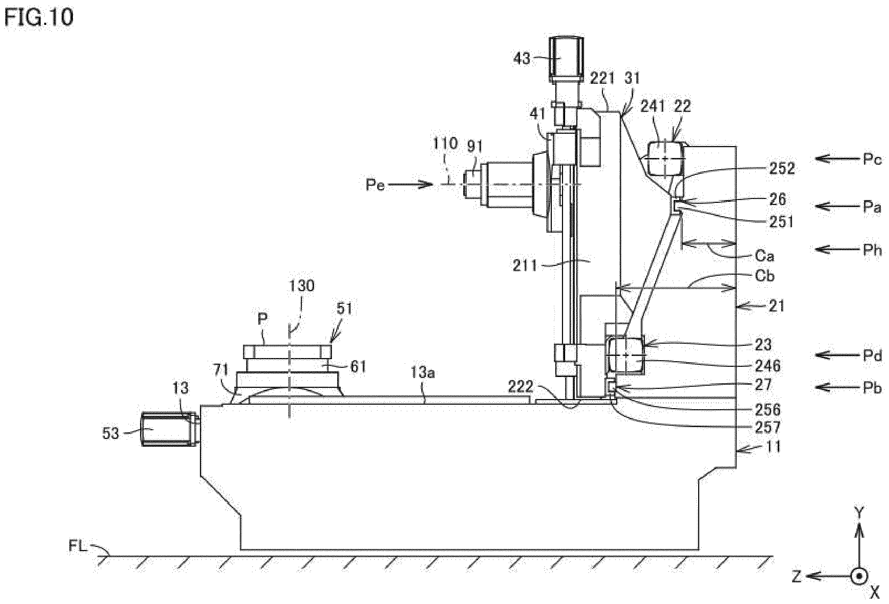

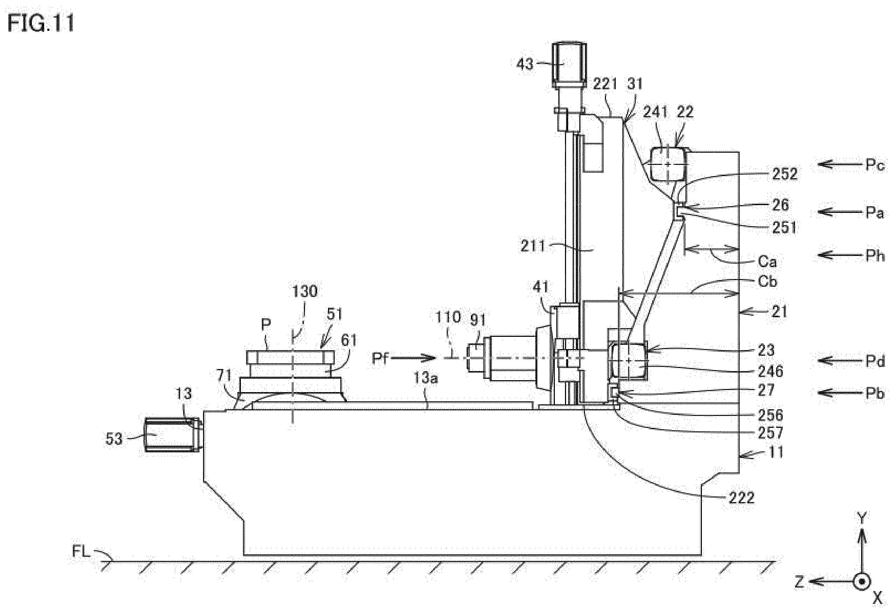

Fig. 10 is a side view showing the machine tool when the tool spindle is positioned at an upper stroke end in the Y-axis direction. Fig. 11 is a side view showing the machine tool when the tool spindle is positioned at a lower stroke end in the Y-axis direction.

Referring to Fig. 10, when tool spindle 91 is positioned at the upper stroke end in the Y-axis direction, rotation center axis 110 of tool spindle 91 is arranged at a fifth position Pe in the Y-axis direction. Fifth position Pe is located above first position Pa in the Y-axis direction. Fifth position Pe is located between first position Pa and third position Pc in the Y-axis direction. Fifth position Pe may be located at the same height as first position Pa.

According to such a configuration, even when tool spindle 91 moves to the upper stroke end in the Y-axis direction, thickness B of frame portion 211 in the Z-axis direction can be maximized at first position Pa, whereby the vibration of saddle 31 can be effectively restrained.

Referring to Fig. 11, when tool spindle 91 is positioned at the lower stroke end in the Y-axis direction, rotation center axis 110 of tool spindle 91 is arranged at a sixth position Pf in the Y-axis direction. Sixth position Pf is located below fourth position Pd in the Y-axis direction. Sixth position Pf may be located at the same height as fourth position Pd or above fourth position Pd in the Y-axis direction. Sixth position Pf is located above second position Pb in the Y-axis direction.

Summarizing the structure of machine tool 100 according to the embodiment of the present invention described above, machine tool 100 according to the present embodiment includes bed 11, column 21 which is provided on bed 11 so as to be erected therefrom, saddle 31 that is a moving body supported by column 21, and tool spindle 91 which is supported by saddle 31 and rotates a tool around rotation center axis 110 extending in the Z-axis direction as a first axial direction parallel to the horizontal direction. Saddle 31 has frame portion 211 which is provided so as to surround tool spindle 91. Thickness B of frame portion 211 in the Z-axis direction changes along the Y-axis direction as a second axial direction parallel to the vertical direction, and becomes maximum at first position Pa closer to upper end portion 221 of frame portion 211 than lower end portion 222 of frame portion 211.

According to thus-configured machine tool 100 of the embodiment of the present invention, it is possible to reduce the weight of saddle 31 and also restrain the vibration of saddle 31 during workpiece machining. As a result, the workpiece machining accuracy can be improved.

Note that the present invention is not limited to a horizontal machining center, but may be, for example, a multitasking machine that includes a tool spindle for rotating a tool around a rotation center axis extending in the horizontal direction, and a workpiece spindle for rotating a workpiece, and has a lathe turning function and a milling function.

The embodiment disclosed this time should be considered to be illustrative in all respects and not restrictive. The scope of the present invention is indicated by the claims rather than the above description, and it is intended to include meanings equivalent to the claims and all changes within the claims.

### INDUSTRIAL APPLICABILITY

The present invention is mainly applicable to a machine tool such as a horizontal machining center or a multitasking machine.

### REFERENCE SIGNS LIST

11 bed; 12 first peripheral wall portion; 12a first top surface; 13 second peripheral wall portion; 13a second top surface; 14 first step portion; 14a third top surface; 15 second step portion; 15a fourth top surface; 21 column; 22 first feeding device; 23 second feeding device; 26 first guide portion; 27 second guide portion; 31 saddle; 41 cross slide; 42, 43, 52, 53 feeding device; 46, 47, 58, 59 guide portion; 51 table; 61 workpiece holder; 71 table base; 91 tool spindle; 100 machine tool; 110 rotation center axis; 130 rotation center axis; 201 virtual plane; 210 opening portion; 211 frame portion; 212 first side wall portion; 213 second side wall portion; 214 upper wall portion; 215 lower wall portion; 216 first motor attachment portion; 217 second motor attachment portion; 218 first nut attachment portion; 219 second nut attachment portion; 220 intermediate rib portion; 221 upper end portion; 222 lower end portion; 226 fifth guide mounting surface; 227 sixth guide mounting surface; 231 first guide mounting surface; 232 second guide mounting surface; 236 first gradually decreasing portion; 237 second gradually decreasing portion; 241, 246 servomotor; 242, 247 screw shaft; 243 nut; 251, 256 rail; 252, 253, 257, 258 slider; 261 third guide mounting surface; 262 fourth guide mounting surface; Pa first position; Pb second position; Pc third position; Pd fourth position; Pe fifth position; Pf sixth position; Ph intermediate position.

## Claims

1. A machine tool comprising:
a bed;
a column provided on the bed so as to be erected therefrom;
a saddle that is a moving body supported by the column; and
a tool spindle that is supported by the saddle and rotates a tool around a rotation center axis extending in a first axial direction parallel to a horizontal direction, wherein the saddle has a frame portion which is provided so as to surround the tool spindle, and a thickness of the frame portion in the first axial direction changes along a second axial direction parallel to a vertical direction, and is maximum at a first position closer to an upper end portion of the frame portion than a lower end portion of the frame portion.

2. The machine tool according to claim 1, wherein the saddle is movable with respect to the column in a third axial direction that is parallel to the horizontal direction and orthogonal to the first axial direction, the tool spindle is movable with respect to the saddle in the second axial direction, and the machine tool further comprises a first guide portion that guides the saddle in the third axial direction and is arranged at the first position in the second axial direction.

3. The machine tool according to claim 2, further comprising a second guide portion that guides the saddle in the third axial direction and is arranged at a second position below the first position in the second axial direction, wherein a thickness of the column in the first axial direction at the second position is larger than a thickness of the column in the first axial direction at the first position.

4. The machine tool according to claim 3, wherein the column has a first guide mounting surface and a second guide mounting surface to which the first guide portion and the second guide portion are attached respectively, and the saddle has a third guide mounting surface and a fourth guide mounting surface which face the first guide mounting surface and the second guide mounting surface in the first axial direction respectively and to which the first guide portion and the second guide portion are attached, respectively.

5. The machine tool according to claim 3 or 4, further comprising:
a first feeding device that is arranged at a position closer to the first guide portion than the second guide portion in the second axial direction and drives the saddle in the third axial direction; and
a second feeding device that is provided at a position closer to the second guide portion than the first guide portion in the second axial direction and drives the saddle in the third axial direction.

6. The machine tool according to any one of claims 1 to 5, wherein the frame portion includes a first gradually decreasing portion in which the thickness of the frame portion in the first axial direction decreases from the first position to the upper end portion of the frame portion in the second axial direction, and a second gradually decreasing portion in which the thickness of the frame portion in the first axial direction decreases from the first position to the lower end portion of the frame portion in the second axial direction.

7. The machine tool according to any one of claims 1 to 6, wherein the tool spindle is movable in the second axial direction with respect to the saddle, and
when the tool spindle is positioned at an upper stroke end in the second axial direction, the rotation center axis is located at the same height as the first position or above the first position in the second axial direction.
